# EUROPÄISCHE PATENTSCHRIFT

(11) **EP 2 258 528 B1**
(45) Veröffentlichungstag und Bekanntmachung des Hinweises auf die Patenterteilung: **25.02.2015**
(21) Anmeldenummer: 10163933.4
(22) Anmeldetag: 26.05.2010
(51) Int. Cl.: B29B 17/02, B07B 4/08, B07B 1/20

(54) **Vorrichtung und Verfahren zur Gummiaufbereitung**
Method and device for preparing rubber
Dispositif et procédé destinés à la préparation de caoutchouc

(30) Priorität: 05.06.2009 DE 102009025924
(43) Veröffentlichungstag der Anmeldung: 08.12.2010
(73) Patentinhaber: ANDRITZ MeWa GmbH, 75391 Gechingen (DE)
(72) Erfinder: Wabnig, Heimo, 71263, Weil der Stadt (DE)
(74) Vertreter: Abel, Thomas Mario

(56) Entgegenhaltungen:
- DE-A1- 19 616 623
- DE-C- 915 408
- US-A- 3 233 836
- US-A- 5 299 744
- US-A1- 2005 107 484

## Beschreibung

Die Erfindung betrifft eine Vorrichtung und ein Verfahren zur Gummiaufbereitung, insbesondere zur Aufbereitung von textilhaltigen Gummiabfällen, insbesondere Altreifen.

Beim Reifenrecycling fallen große Gummimengen in unterschiedlicher Qualität an. Von äußeren Reifenbereichen abgeschälte Gummiteile bestehen weitgehend aus vernetztem Gummi mit allenfalls geringen Anteilen von Störstoffen. Karkassen oder aus Karkassen gewonnenes Granulat enthalten dagegen hohe Anteile von Fremdstoffen, wie beispielsweise Gewebearmierungen. Soll der in Karkassen enthaltene Gummianteil zurück gewonnen werden, muss dieser von den Gewebeanteilen getrennt werden. Die Trennung des Gummis von Gewebe und Textilien stellt jedoch ein erhebliches technisches Problem dar. Das Problem ergibt sich insbesondere bei der Verwertung von PKW-Reifen, die hohe Textilanteile haben.

Die US 2005/0107484 A1 beschreibt ein Verfahren und eine Vorrichtung zur Verarbeitung von Gummipartikeln. Nach einer ersten Zerkleinerungsstufe werden Metallteile aus der Materialgemisch entfernt. Anschließend werden Fasern aus dem Gemisch entfernt und die Materialpartikel in einer zweiten Stufe weiter zerkleinert. Das Abtrennen von Fasern erfolgt über eine Absaugung und einen Zyklonabscheider. Nachfolgend werden erneut Metallpartikel und Fasern aus dem Materialstrom entfernt. Im Zusammenhang mit dieser zweiten Stufe zur Faserentfernung ist eine Einrichtung beschrieben, die einen zylindrischen Behälter mit einem darin angeordneten rotierenden Flügel aufweist. Durch die Zentrifugalkraft werden ausreichend kleine Partikel durch ein Sieb befördert und entnommen. Zu große Partikel und Fasern verklumpen und können nicht durch das Sieb hindurchtreten. Diese Materialverklumpungen werden separat aus der Einrichtung gefördert.

DE 196 16 623 A1 beschreibt ein Verfahren eine Vorrichtung zur Trennung von zähelastischem Kunststoff und zerfasernden Stoffen wie Papier. Hierfür wird das Materialgemisch in einem Siebkorb eingebracht, in dem Schaufeln rotieren. Durch die rotierenden Schaufeln wird das faserige Material zerkleinert und tritt durch den Siebkorb radial nach außen. Der zähelastische Kunststoff wird axial gefördert und tritt nicht durch das Sieb hindurch. Eine Zerkleinerung des Kunststoffs in Partikel gewünschter Größe und eine Trennung von Kunststoff-Grobmaterial und feinen Kunststoffpartikeln kann bei dieser Anordnung nicht stattfinden. Mit dem beschriebenen Verfahren wird insbesondere Papier von zähelastischem Kautschuk getrennt.

Die Erfindung hat sich zum Ziel gesetzt, einen Weg aufzuzeigen, wie aus Gummiabfällen, insbesondere textilhaltigen Gummiabfällen, der Gummianteil so zurück gewonnen werden kann, dass er wieder zur Erzeugung von hochwertigen Gummiprodukten, insbesondere Autoreifen, einsetzbar ist.

Diese Aufgabe wird mit der Vorrichtung nach Anspruch 1 und dem Verfahren nach Anspruch 11 gelöst:

Die erfindungsgemäße Vorrichtung umfasst eine Siebeinrichtung, der eine Fördereinrichtung zugeordnet ist. Diese bewegt und beschleunigt die Gummipartikel einschließlich etwaiger Textilfasern gegen eineaufrecht stehende Siebtrommel, wodurch Gummipartikel, deren Größe geringer als die Maschenweite des Siebs ist durch die Siebtrommel dringen können. Außerdem können größere Partikel durch diesen Prozess zerschnitten oder zerrissen werden, so dass sie nach der so verursachten Zerkleinerung ebenfalls durch die Siebtrommel dringen können. Durch die Siebtrommel können außerdem lose Fasern und Faserbruchstücke dringen und zwar auch Fasern, deren Länge die Maschenweite des Siebs überschreitet. Die Maschenweite der Siebtrommel kann relativ gering festgelegt werden, beispielsweise auf einen Wert zwischen ein und zwei Millimetern. Bedarfsweise kann dieser Wert natürlich auch anderweitig festgesetzt werden. Die Fördereinrichtung kann insbesondere so ausgebildet sein, dass sie den Partikeln einen hauptsächlich zu dem Sieb hin gerichteten Impuls erteilt.

An der Vorrichtung ist ein an die Außenseite des Siebs anschließender Transportkanal vorgesehen, der zu einer Flus-Abtrenneinrichtung führt. Diese Abtrenneinrichtung macht sich den Umstand zunutze, dass sich die durch das Sieb gelangten Faserreste zunächst an der Siebaußenseite ablagern und dort einen lockeren Belag bilden. Dieser wird von den durch das Sieb schießenden Gummipartikeln immer wieder flockenweise abgelöst, abgeblasen oder fällt mit zunehmender Schwere von allein ab. Die Flocken haben eine Zusammenballungstendenz und bilden locker verfilzte Flus- oder Watteballen, die sich in der Flusabtrenneinrichtung durch physikalische Trennverfahren vom Gummifeinkorn abtrennen lassen.

Die nicht durch die Siebtrommel der Siebeinrichtung gelangten Gummi- und Faserpartikel werden vorzugsweise in der Siebeinrichtung gehalten bis eventuelle Verklumpungen gelöst sind und der Siebdurchtritt ermöglicht wird. Partikel, die dafür zu groß sind, werden in eine Rezirkulationsstrecke geleitet, über die an einem Ende der Siebeinrichtung abgegebenes Grobmaterial einer Mahleinrichtung und danach wieder der Siebeinrichtung an ihrem Eingang oder Eintritt zugeführt wird.

Die Flusabtrenneinrichtung ist vorzugsweise als Vibrationssieb ausgebildet. Dieses kann ein horizontal oder leicht geneigt angeordnetes vorzugsweise ebenes seitlich vibrierendes Sieb aufweisen. Alternativ kann eine rotierende oder hin und her drehende Siebtrommel mit zum Beispiel horizontaler oder leicht geneigt angeordneter Drehachse Anwendung finden. Auf dem Vibrationssieb oder dem Sieb der sonstigen Trenneinrichtung bildet sich eine bewegte Schicht aus Gummi-Feinkorn, auf dem die Fluszusammenballungen aufschwimmen. Diese können eine Größe von ein bis zwei Zentimetern bis zu mehreren Zentimetern, beispielsweise zehn Zentimeter oder mehr haben. Während das Gummifeinkorn durch das Sieb fällt, bleiben die zusammengeballten Flusverbünde auf dem Sieb liegen. Die Zusammenballung der einzelnen Flusflocken zu Flusballen oder locker verfilzten kugelartigen Gebilden wird durch die Bewegung auf dem Vibrationssieb begünstigt.

Anstelle eines Vibrationssiebs können auch andere Trenneinrichtungen, wie beispielsweise Luftherde, Windsichter oder dergleichen Anwendung finden.

Vorzugsweise weist das Flus-Sieb der Flusabtrenneinrichtung eine Maschenweite auf, die zumindest so groß ist wie die Maschenweite der Siebtrommel der Siebeinrichtung. Vorzugsweise ist die Maschenweite jedoch, zumindest etwas größer. Somit können mit Sicherheit alle von der Siebeinrichtung abgegebenen Gummipartikel durch das Flus-Sieb der Flusabtrenneinrichtung gelangen. Dagegen bleiben die Fluszusammenballungen, deren einzelne Faserpartikel durchaus durch die Siebtrommel der Siebeinrichtung gelangt sind, auf dem vergleichsweise weitmaschigeren Flus-Sieb liegen.

Die Flusabtrenneinrichtung und die Siebeinrichtung können beide kontinuierlich arbeiten. Es ist aber auch möglich, eine oder beide Maschinen chargenweise arbeiten zu lassen. Bei der Flusabtrenneinrichtung kann der kontinuierliche Betrieb dazu führen, dass sich die Fluszusammenballungen an einem Ende desselben sammeln und dort abgenommen werden können. Bei chargenweisem Betrieb können die Fluszusammenballungen von dem Flus-Sieb jeweils abgenommen werden, sobald das Gummifeinkorn einer Siebbeladung durch das Flus-Sieb abgesiebt worden ist.

Dabei weist die Siebeinrichtung als Fördereinrichtung eine schnell rotierende Förderschnecke mit aufrecht stehender Drehachse auf. Diese Fördereinrichtung fördert die textilhaltigen Gummiabfälle vertikal aufwärts, wobei die Gummiabfälle sowohl einen Drall um die Drehachse der Fördereinrichtung sowie eine auswärts gerichtete Zentrifugalbewegung erhalten. Es kommt dadurch zu Kollisionen zwischen der Siebtrommel und den Gummipartikeln, was zur Auflösung von Klumpen und Trennung von aneinander haftenden Partikeln führt. Außerdem kann durch die mechanische Beanspruchung eine zusätzliche Aktivierung (Devulkanisation) der Gummipartikel bewirkt werden. Ausreichend feine Gummibestandteile und Faserreste können ohne weiteres durch die Siebtrommel gelangen.

Die Förderschnecke kann entlang der gesamten Drehachse durchgängig ausgebildet sein. Sie kann außerdem Unterbrechungen aufweisen, so dass sie durch eine Folge einzelner Schaufeln gebildet wird, die radial von einer Welle weg stehen. Die Schaufeln haben vorzugsweise einen Anstellwinkel, um eine Aufwärtsförderung der Gummipartikel zu bewirken. Der Anstieg der Schaufeln und/oder der Förderschnecke kann über die gesamte Länge der Welle konstant oder auch unterschiedlich ausgebildet sein. Vorzugsweise ist der Anstieg im unteren Bereich der Förderstrecke, d.h. der Welle geringer als im oberen Bereich. Es ist auch möglich eine teilweise durchgehende Förderschnecke mit einem Förderabschnitt zu kombinieren, der nur einzelne Schaufeln aufweist. Die einzelnen Schaufeln haben gegenüber der durchgehenden Förderstrecke den Vorzug, dass sie mit ihren Vorderkanten eine weitere Zerkleinerung der Gummipartikel bewirken können.

Dabei wird die Siebeinrichtung mit Gummikorn beschickt, das von einer Gummimühle abgegeben wird. Als Gummimühle wird vorzugsweise eine Walzenmühle eingesetzt, die zwei aufeinander zu vorgespannte gegensinnig drehend angetriebene Walzen aufweist. Vorzugsweise sind diese beiden Walzen mit unterschiedlichen Drehzahlen angetrieben. Das Drehzahlverhältnis liegt vorzugsweise im Bereich von 1:5 bis 1:30.

Die Walzen haben vorzugsweise gehärtete oder mit einem rauen harten Belag versehene Oberflächen. Der zwischen den beiden Walzen eingestellte Spalt ist vorzugsweise 0 oder nahezu 0, zum Beispiel wenige zehntel Millimeter. Vorzugsweise sind die Walzen federnd aufeinander zu vorgespannt, wobei vorzugsweise einstellbare Anschläge ein festes Zusammendrücken der beiden Walzen verhindern. Federmittel spannen die Walzen gegen Anschläge vor, die eine zu feste Berührung der beiden Walzenmäntel verhindern.

Das erfindungsgemäße Verfahren umfasst somit die Schritte Zerkleinern und Aussieben der Feinfraktion des Gemischs aus Fasern und Gummikorn, Zusammenballen (Koagulieren) der Fasern zu Körpern (Flocken, Watte oder Filz), die deutlich größer sind als das Gummikorn, und Absieben der Faserkörper.

Weitere Einzelheiten vorteilhafter Ausführungsformen der Erfindung sind Gegenstand von Ansprüchen sowie der Zeichnung und der Beschreibung. Die Beschreibung beschränkt sich auf wesentliche Aspekte der Erfindung und sonstiger Gegebenheiten. Die Zeichnung offenbart weitere Details und ist ergänzend heranzuziehen. Es zeigen:
Figur 1 eine Aufbereitungsvorrichtung in einer Ausführungsform in schematischer Darstellung,
Figur 2 einen Ausschnitt aus der Aufbereitungsvorrichtung nach Figur 1, in ausschnittsweiser schematischer Veranschaulichung und
Figur 3 einen Ausschnitt aus der zur Aufbereitungseinrichtung nach Figur 1 gehörigen Flusabtrenneinrichtung in schematischer Darstellung.

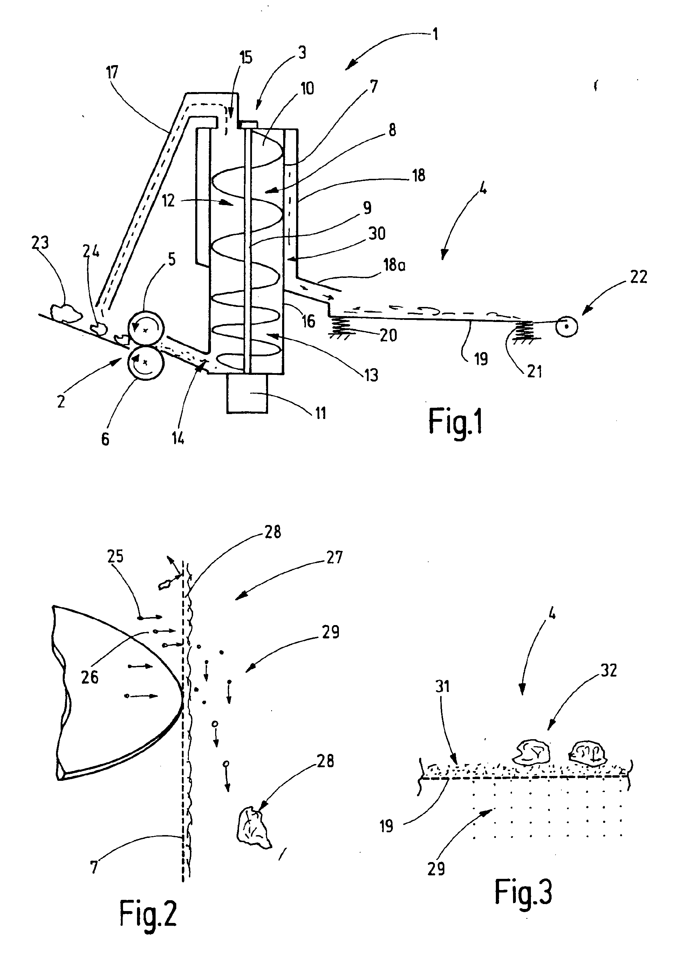

In Figur 1 ist eine Vorrichtung 1 zur Gummiaufbereitung veranschaulicht, wobei zu dieser Vorrichtung 1 eine Gummimühle 2, eine Siebeinrichtung 3 und eine Flusabtrenneinrichtung 4 gehören.

Die Gummimühle 2 umfasst vorzugsweise wenigstens zwei gegensinnig angetriebene Walzen 5, 6, die zwischen einander einen sehr engen, beispielsweise auf wenige Zehntel Millimeter oder Null Millimeter eingestellten Spalt aufweisen. Beide Walzen 5, 6 sind vorzugsweise mit unterschiedlichen Drehzahlen angetrieben, beispielsweise läuft eine der beiden Walzen, zum Beispiel die Walze 6, mit einer niedrigen und die andere Walze 5 mit einer hohen Drehzahl. Das Drehzahlverhältnis kann einstellbar oder auf einen bestimmten Wert, beispielsweise 1:5 bis 1:30 festgelegt sein. Vorzugsweise können die Walzen 5, 6 durch entsprechende Kräfte voneinander weg gedrängt werden. Dazu ist mindestens eine der Walzen 5 oder 6 in Radialrichtung federnd gelagert und durch ein Federmittel gegen einen Anschlag in Richtung auf die jeweils andere Walze vorgespannt. Die Walzen 5, 6 sind vorzugsweise innen gekühlt und bewirken eine Kaltvermahlung des Gummis mit weitgehender Reaktivierung des Werkstoffs (Devulkanisierung). Die Gummimühle 3 in der vorgestellten oder einer anderen Ausführungsform gibt ein Gummipulver von einer Korngröße zwischen 1 und 2 mm ab. Es ist aber auch möglich, andere Gummimühlen zu verwenden, die andere Korngrößen erzeugen.

Die Siebeinrichtung 3 weist eine vorzugsweise zylindrische, aufrecht stehende Siebtrommel 7 auf, in der eine Fördereinrichtung 8 angeordnet ist. Die Siebtrommel 7 weist beispielsweise eine Maschenweite von 1 bis 2 mm, beispielsweise 1,4 oder 1,5 mm auf. Die Fördereinrichtung 8 fördert das aufzubereitende Gummimaterial vertikal aufsteigend. Dazu ist die Fördereinrichtung 8, als Schneckenförderer oder auch als Flügelförderer ausgebildet. Eine zentrale Welle 9 ist dazu koaxial zu der Siebtrommel 78 angeordnet und mit einer Förderschnecke 10 versehen, die sich vorzugsweise über die gesamte Länge der Welle 9 erstreckt. Die Welle 9 ist an ihrem oberen Ende und an ihrem unteren Ende drehbar gelagert. Zum Antrieb dient eine in Figur 1 schematisch veranschaulichte Antriebseinrichtung 11.

Die Förderschnecke 10 kann eine durchgehende Wendel sein, wie es in Figur 1 angedeutet ist. Dabei kann die Förderschnecke 10 in einen oder mehrere Abschnitte 12, 13 unterteilt sein, die beispielsweise unterschiedliche Steigungen aufweisen. Zum Beispiel kann die Steigung in dem unteren Bereich 13 der Förderschnecke 10 geringer sein als in dem oberen Bereich 12.

Es ist aber auch möglich, anstelle der durchgehenden Förderschnecke 10 in dem oberen Abschnitt 12 und/oder in dem unteren Abschnitt 13 einzelne, sich von der Welle 9 radial weg erstreckende Flügel vorzusehen, die das Gummimaterial beschleunigen und nach oben fördern. Die Welle 9 läuft mit relativ hoher Drehzahl von beispielsweise mehreren oder auch mehren 10 Umdrehungen pro Sekunde. Diese Drehbewegung erzeugt einen aufwärts gerichteten Förderstrom von einem Eingang 14 der Siebeinrichtung 3 zu einem oberen Ausgang 15. Der untere Abschnitt 13 der Förderschnecke 10 wird vorzugsweise von einem geschlossenen Mantel 16 eingehaust. Dieser schließt sich unten an die Siebtrommel 7 an. Der Abschnitt 13 der Fördereinrichtung 8 dient damit vorwiegend als Zerkleinerungseinrichtung. Es ist möglich die Siebtrommel 7 über die gesamte Länge der Förderschnecke 10 auszubilden, was zu alternativen Ausführungsformen führt.

Dabei ist zwischen dem Ausgang 15 und dem Eingang der Gummimühle 2 ein Rückführungskanal 17 angeordnet, der nicht durch die Siebtrommel 7 gelangtes Material, also die Grobfraktion, mit dem in die Gummimühle 2 geleiteten Material mischt. Es wird somit zusammen mit dem frischen Material einer Zerkleinerung unterzogen und danach wieder dem Eingang 14 zuführt.

Die Siebtrommel 7 ist von einem Gehäuse 18 umgeben, das mit der Siebtrommel 7 einen ringförmigen Transportkanal 30 definiert. Dieser ist an dem unteren Ende der Siebtrommel 7 geschlossen und führt zu einem Ausgang 18a, über den die von der Siebeinrichtung 3 ausgesiebte Feinfraktion an die Flusabtrenneinrichtung 4 übergeben wird.

Die Flusabtrenneinrichtung 4 ist beispielsweise als Schwingsieb ausgebildet. Sie umfasst ein horizontal angeordnetes Flus-Sieb 19, das beispielsweise federnd oder gelenkig gelagert ist. Dies ist in Figur 1 durch Federn 20, 21 angedeutet. Dem Flus-Sieb 19 ist ein Schwingantrieb 22 zugeordnet, der dazu eingerichtet ist, dem Flus-Sieb 19 eine vorzugsweise horizontale Schwingbewegung zu erteilen. Das Flus-Sieb 19 weist vorzugsweise eine Maschenweite auf, die mindestens so groß ist wie die Maschenweite der Siebtrommel 7. Sie kann auch deutlich größer sein als diese.

Die insoweit beschriebene Vorrichtung 1 arbeitet wie folgt:
In Betrieb werden der Gummimühle 2 Gummistücke 23, 24 von mehreren Millimetern bis Zentimetern Größe zugeführt. Die Gummistücke 23, 24 durchlaufen den zwischen den unterschiedlich schnell drehenden Walzen 5, 6 gebildeten Spalt und werden dabei sehr hohen Scher- und Zerreißkräften ausgesetzt. Sie werden dadurch zerkleinert, wobei die mittlere Korngröße zum Beispiel zwischen 1 und 2 mm liegt. Durch die mechanische Beanspruchung werden C-S-C-Brücken aufgebrochen und das Material wird reaktiviert. Es entsteht vulkanisierbares Gummimehl.

Das Gummimehl enthält die aus den Gummistücken 23, 24 stammenden Gewebereste in Form von Fasern, die bereits teilweise freigesetzt sind und teilweise auch noch mit Gummikörnern in fester Verbindung stehen können. Dieses Material wird zusammen mit dem durch den Rückführungskanal 17 ankommenden Material in den Eingang der Gummimühle 2 und dann in den Eingang 14 der Siebeinrichtung 3 geleitet. Dort wird das Material von der schnell drehenden Förderschnecke 10 erfasst und herumgewirbelt. Es kommt zum weiteren Zerreißen oder Zerschlagen von Gummipartikelkonglomeraten und zum weiteren Trennen von Gummi und Fasern. Außerdem kann es zur weiteren Aktivierung (d.h. zur weiteren Devulkanisation) des Gummis kommen.

Die entstehende Mischung aus Gummipartikeln und Fasern wird aufwärts gefördert und durch die Drehbewegung und die daraus resultierende Zentrifugalkraft gegen die Siebtrommel 7 geschleudert. Die Förderschnecke 10 kann mit der Siebtrommel 7 einen engen Spalt von wenigen Millimetern bis Zentimetern festlegen. Ausreichend zerkleinerte Gummipartikel dringen als Gummipulver (Partikel 25, 26) durch die Siebtrommel 7 und rieseln außen ab. Dieser Vorgang ist in Figur 2 veranschaulicht. Ebenso dringen Fasern und Faserbruchstücke durch die Siebtrommel 7 und bilden auf der Außenseite 27 der Siebtrommel 7 eine flauschige Flusablagerung 28. Diese Ablagerung haftet zunächst auf der Siebtrommel 7, wobei sich von Zeit zu Zeit lokal Flocken 28 lösen, die zusammen mit dem ausgesiebten Gummifeinkorn 29 den von der Einhausung 18 und dem Ausgang 18a umschlossenen Transportkanal 30 zu der Flusabtrenneinrichtung 4 hin durchlaufen.

Auf dem Flus-Sieb 19 der Flusabtrenneinrichtung 4 bildet sich, zum Beispiel wie in Figur 3 veranschaulicht, zumindest temporär, ein Bett 31 aus Gummifeinkorn. Dieses Bett 31 kann durch von unten einströmende Luft oder auch nur durch die Vibrationsbewegung des Schwingsiebs fluidisiert sein. Die mitgeführten Flusflocken schwimmen auf dem Bett 31 auf, wobei sie sich zu Faserkörpern 32 zusammenballen.

Wegen der relativ großen Maschenweite des Flus-Siebs 19 rieselt das Gummifeinkorn 29 sehr leicht ab. Die Faserkörper 32 können sich an einem Ende des Schwingsiebs sammeln und dort abgenommen oder ausgeleitet werden. Damit eignet sich die Anlage für den kontinuierlichen Betrieb. Alternativ ist chargenweiser Betrieb möglich.

Die Vorrichtung 1 zur Gummiaufbereitung kann ein Schleudersieb in Gestalt einer Siebeinrichtung 3 mit einem Sieb umfassen, das Gummifeinkorn 29 der gewünschten Größe sowie Fasern und Faserreste durchdringen lässt. Zur Beseitigung der Faserreste wird der Umstand genutzt, dass sich diese zunächst an der Siebaußenseite 27 anlagern und dann flockenweise abfallen. Die nachgeschaltete Flusabtrenneinrichtung 4 bewirkt das Zusammenballen von Flussflocken zu mehr oder weniger lockeren Wirrfaserkörpern relativ großen Durchmessers, die durch ein nachfolgendes Sieb leicht ausgesondert werden können. Es entsteht Gummifeinkorn, das nahezu faserfrei und von hoher Recyclingqualität ist. Insbesondere ist es durch die starke mechanische Beanspruchung auch ohne Zuhilfenahme von Devulkanisationsstoffen reaktiviert und kann allein durch Druck und Wärme wieder vulkanisiert und somit zu Gummikörpern verarbeitet werden. Es eignet sich als Rohstoff zur Reifenherstellung.

### Bezugszeichen

- 1: Vorrichtung
- 2: Gummimühle
- 3: Siebeinrichtung
- 4: Flusabtrenneinrichtung
- 5, 6: Walzen
- 7: Siebtrommel
- 8: Fördereinrichtung
- 9: Welle
- 10: Förderschnecke
- 11: Antriebseinrichtung
- 12, 13: Abschnitte
- 14: Eingang
- 15: Ausgang
- 16: Mantel
- 17: Rückführungskanal
- 18: Gehäuse
- 18a: Ausgang
- 19: Flus-Sieb
- 20, 21: Federn
- 22: Schwingsieb
- 23, 24: Gummistücke
- 25, 26: Gummipartikel
- 27: Außenseite
- 28: Flusablagerung
- 29: Gummi-Feinkorn
- 30: Transportkanal
- 31: Bett
- 32: Faserkörper

## Patentansprüche

1. Vorrichtung (1) zur Gummiaufbereitung, insbesondere zur Aufbereitung von textilhaltigen Gummiabfällen,
mit einer Gummimühle (2), die Gummipartikel abgibt und die Siebeinrichtung (3) mit Gummipartikeln beschickt,
mit einer Siebeinrichtung (3), die eine Fördereinrichtung (8) zur Bewegung und Beschleunigung von Gummipartikeln gegen ein Sieb (7) aufweist, wodurch Gummipartikel, deren Größe geringer als die Maschenweite des Siebs (7) ist sowie lose Fasern und Faserbruchstücke durch das Sieb dringen, wobei die Fördereinrichtung (8) das aufzubereitende Gummimaterial in einem aufwärts gerichteten Förderstrom von einem Eingang (14) der Siebeinrichtung (3) zu einem oberen Ausgang (15) fördert,
mit einem Transportkanal (30), der an eine Außenseite (27) des Siebs (7) anschließt und mit einer Flusabtrenneinrichtung (4), zu der der Transportkanal (30) führt,
**dadurch gekennzeichnet, dass** das Sieb von einer aufrecht stehenden Siebtrommel (7) gebildet ist, und die Fördereinrichtung (8) eine zentrale Welle (9) mit einer Förderschnecke (10) oder mit Förderflügeln aufweist,
dass zwischen dem Ausgang (15) der Siebeinrichtung (3) und dem Eingang der Gummimühle (2) Rückführungskanal (17) angeordnet ist, der nicht durch die Siebtrommel (7) gelangtes Grobmaterial mit dem in die Gummimühle (2) geleiteten Material mischt, so dass das Grobmaterial zusammen mit neu zugeführtem Material einer Zerkleinerung unterzogen und danach wieder dem Eingang (14) der Siebeinrichtung (3) zugeführt wird.

2. Vorrichtung nach Anspruch 1, **dadurch gekennzeichnet, dass** die Flusabtrenneinrichtung (4) ein Vibrationssieb ist.

3. Vorrichtung nach Anspruch 1, **dadurch gekennzeichnet, dass** die Flusabtrenneinrichtung (4) ein Luftherd ist.

4. Vorrichtung nach Anspruch 1, **dadurch gekennzeichnet, dass** die Flusabstrenneinrichtung (4) ein Windsichter ist.

5. Vorrichtung nach Anspruch 1, **dadurch gekennzeichnet, dass** die Flusabtrenneinrichtung (4) ein Flus-Sieb (19) aufweist.

6. Vorrichtung nach Anspruch 5, **dadurch gekennzeichnet, dass** das Flus-Sieb (19) eine Maschenweite aufweist, die größer ist als die Maschenweite der Siebtrommel (7).

7. Vorrichtung nach Anspruch 1, **dadurch gekennzeichnet, dass** die Fördereinrichtung (8) eine schnelllaufende Förderschnecke (10) ist, die von der im Wesentlichen zylindrisch ausgebildeten Siebtrommel (7) umgeben ist.

8. Vorrichtung nach Anspruch 1, **dadurch gekennzeichnet, dass** an einem oberen Ende der Förderschnecke (10) ein Materialauslass (15) und an einem unteren Ende der Förderschnecke (10) ein Materialeintritt (14) vorgesehen sind.

9. Vorrichtung nach Anspruch 1, **dadurch gekennzeichnet, dass** die Gummimühle (2) eine Walzenmühle mit zwei aufeinander zu vorgespannten gegensinnig mit unterschiedlichen Drehzahlen drehend angetriebenen Walzen (5, 6) ist.

10. Vorrichtung nach Anspruch 9, **dadurch gekennzeichnet, dass** die Walzen (5, 6) auf einen Ruhespalt von Null oder wenigen zehntel Millimetern eingestellt sind.

11. Verfahren zur Gummiaufbereitung, insbesondere zur Aufbereitung von textilhaltigen Gummiabfällen,
bei dem ein in einer Gummimühle (2) vorzerkleinertes, Textilfasern enthaltendes Gummimaterial einer Siebeinrichtung (3) mit einer Fördereinrichtung (8) zugeführt und mittels der Fördereinrichtung (8) gegen eine aufrecht stehende Siebtrommel (7) der Siebeinrichtung (3) geschleudert wird, wobei die Fördereinrichtung (8) eine zentrale Welle (9) mit einer Förderschnecke (10) oder mit Förderflügeln aufweist und das aufzubereitende Gummimaterial in einem aufwärts gerichteten Förderstrom von einem Eingang (14) der Siebeinrichtung (3) zu einem oberen Ausgang (15) fördert,
mit einem zwischen dem Ausgang (15) der Siebeinrichtung (3) und dem Eingang der Gummimühle (2) angeordneten Rückführungskanal (17), der nicht durch die Siebtrommel (7) gelangtes Grobmaterial mit dem in die Gummimühle (2) geleiteten Material mischt, so dass das Grobmaterial zusammen mit neu zugeführtem Material einer Zerkleinerung unterzogen und danach wieder dem Eingang (14) der Siebeinrichtung (3) zuführt wird
wobei das Gummimaterial durch das Schleudern gegen die Siebtrommel (7) von den Textilfasern gelöst wird, so dass zumindest ein Teil des Gummimaterials und der Textilfasern als Gemisch aus Gummi-Feinkorn (29) und lockeren Textilfasern durch die Siebtrommel (7) tritt, so dass an der Siebaußenseite (27) Gummi-Feinkorn (29) abrieselt und sich ein gelegentlich ablösender Belag (28) aus Textilfaserflocken (28) aufbaut, und
bei dem in einem weiteren Verfahrensschritt das Gummi-Feinkorn (29) von den enthaltenen Faserflocken (28) getrennt wird.

12. Verfahren nach Anspruch 11, **dadurch gekennzeichnet, dass** die Textilfaserflocken (28) durch Bewegung des aus Gummi-Feinkorn (29) und Faserflocken (29) bestehenden Gemischs zu Filzkörpern zusammengeballt und aus dem Gummi-Feinkorn (29) entfernt werden.

## Claims

1. Device (1) for processing rubber, in particular for processing rubber waste containing textiles,
with a rubber mill (2), which discharges rubber particles and loads the screening device (3) with rubber particles,
with a screening device (3), which has a transport device (8) for moving and accelerating rubber particles against a screen (7), through which rubber particles of smaller size than the mesh size of the screen (7) as well as fibres and fibre fragments pass through the screen, wherein the transport device (8) transports the rubber material to be processed in an upwardly directed transport stream from an inlet (14) of the screening device (3) to an upper outlet (15),
with a transport duct (30), which adjoins an outer surface (27) of the screen (7), and with a lint separation device (4), to which the transport duct (30) leads,
**characterised in that** the screen is formed by an upright standing screening drum (7), and the transport device (8) has a central shaft (9) with a conveyor worm (10) or with transport blades,
that a recirculation duct (17) is arranged between the outlet (15) of the screening device (3) and the inlet of the rubber mill (2), which mixes coarse material not passed through the screening drum (7) with the material directed into the rubber mill (2), so that the coarse material is subjected to a crushing operation together with newly supplied material and is then fed to the inlet (14) of the screening device (3) again.

2. Device according to claim 1, **characterised in that** the lint separation device (4) is a vibratory screen.

3. Device according to claim 1, **characterised in that** the lint separation device (4) is a pneumatic table separator.

4. Device according to claim 1, **characterised in that** the lint separation device (4) is an air separator.

5. Device according to claim 1, **characterised in that** the lint separation device (4) has a lint screen (19).

6. Device according to claim 5, **characterised in that** the lint screen (19) has a mesh size that is larger than the mesh size of the screening drum (7).

7. Device according to claim 1, **characterised in that** the transport device (8) is a highspeed conveyor worm (10), which is surrounded by the substantially cylindrical screening drum (7).

8. Device according to claim 1, **characterised in that** a material exit (15) is provided on an upper end of the conveyor worm (10) and a material entry (14) is provided on a lower end of the conveyor worm (10).

9. Device according to claim 1, **characterised in that** the rubber mill (2) is a roll mill with two rolls (5, 6) prestressed towards one another and driven in opposite directions to rotate at different speeds.

10. Device according to claim 9, **characterised in that** the rolls (5, 6) are set to a resting gap of zero or of few tenths of a millimetre.

11. Process for processing rubber, in particular for processing rubber waste containing textiles,
in which a rubber material containing textile fibres that has been pre-crushed in a rubber mill (2) is fed to a screening device (3) with a transport device (8) and is flung by means of the transport device (8) against an upright standing screening drum (7) of the screening device (3), wherein the transport device (8) has a central shaft (9) with a conveyor worm (10) or with transport blades and transports the rubber material to be processed in an upwardly directed transport stream from an inlet (14) of the screening device (3) to an upper outlet (15),
with a recirculation duct (17) arranged between the outlet (15) of the screening device (3) and the inlet of the rubber mill (2), which mixes coarse material not passed through the screening drum (7) with the material directed into the rubber mill (2), so that the coarse material is subjected to a crushing operation together with newly supplied material and is then fed to the inlet (14) of the screening device (3) again, wherein the textile fibres are removed from the rubber material by this being flung against the screening drum (7), so that at least part of the rubber material and the textile fibres passes through the screening drum (7) as mixture of rubber-fine grain (29) and loose textile fibres, so that rubber-fine grain (29) trickles off and an occasionally detaching covering (28) of textile fibre tufts (28) builds up on the outer surface (27) of the screen, and
in which in a further process step the rubber-fine grain (29) is separated from the contained fibre tufts (28).

12. Process according to claim 11, **characterised in that** the textile fibre tufts (28) are rolled together into felt balls (29) by movement of the mixture of rubber-fine grain (29) and fibre tufts (29) and are removed from the rubber-fine grain (29).

## Revendications

1. Dispositif (1) de traitement de caoutchouc, en particulier de traitement de déchets de caoutchouc contenant des textiles,
comprenant un broyeur de caoutchouc (2) qui délivre des particules de caoutchouc et alimente le dispositif à tamis (3) en particules de caoutchouc,
comprenant un dispositif à tamis (3) qui présente un dispositif transporteur (8) destiné à déplacer et accélérer les particules de caoutchouc contre un tamis (7), ce qui a pour effet que des particules de caoutchouc, dont la taille est inférieure à l'ouverture de maille du tamis (7), ainsi que des fibres et des fragments de fibres libres traversent le tamis, sachant que le dispositif transporteur (8) transporte le matériau de caoutchouc à traiter dans un flux de transport dirigé vers le haut, depuis une entrée (14) du dispositif à tamis (3) jusqu'à une sortie haute (15),
comprenant un canal de transport (30), qui se raccorde à une face externe (27) du tamis (7), et comprenant un dispositif de séparation de peluches (4) auquel mène le canal de transport (30),
**caractérisé en ce que** le tamis est constitué d'un tambour tamis (7) vertical et le dispositif transporteur (8) présente un arbre (9) central doté d'une vis transporteuse (10) ou d'ailettes transporteuses,
**en ce qu'**il est prévu, entre la sortie (15) du dispositif à tamis (3) et l'entrée du broyeur de caoutchouc (2), un canal de retour (17) qui mélange la matière grossière n'ayant pas traversé le tambour tamis (7) avec la matière acheminée dans le broyeur de caoutchouc (2), de sorte que la matière grossière est soumise à un broyage, conjointement avec la nouvelle matière amenée, et est ensuite renvoyée à l'entrée (14) du dispositif à tamis (3).

2. Dispositif selon la revendication 1, **caractérisé en ce que** le dispositif de séparation de peluches (4) est un tamis à vibrations.

3. Dispositif selon la revendication 1, **caractérisé en ce que** le dispositif de séparation de peluches (4) est une table d'épuration pneumatique.

4. Dispositif selon la revendication 1, **caractérisé en ce que** le dispositif de séparation de peluches (4) est un séparateur à air.

5. Dispositif selon la revendication 1, **caractérisé en ce que** le dispositif de séparation de peluches (4) présente un tamis à peluches (19).

6. Dispositif selon la revendication 5, **caractérisé en ce que** le tamis à peluches (19) présente une ouverture de maille qui est supérieure à l'ouverture de maille du tambour tamis (7).

7. Dispositif selon la revendication 1, **caractérisé en ce que** le dispositif transporteur (8) est une vis transporteuse (10) à grande vitesse qui est entourée par le tambour tamis (7) réalisé sensiblement sous une forme cylindrique.

8. Dispositif selon la revendication 1, **caractérisé en ce qu'**une sortie de matière (15) est prévue à une extrémité supérieure de la vis transporteuse (10) et une entrée de matière (14) est prévue à une extrémité inférieure de la vis transporteuse (10).

9. Dispositif selon la revendication 1, **caractérisé en ce que** le broyeur de caoutchouc (2) est un broyeur à cylindres, comportant deux cylindres (5, 6) qui sont mis sous précontrainte l'un en direction de l'autre et sont entraînés en rotation dans des sens opposés avec des vitesses différentes.

10. Dispositif selon la revendication 9, **caractérisé en ce que** les cylindres (5, 6) sont réglés sur un écartement au repos qui est de zéro ou de quelques dixièmes de millimètres.

11. Procédé de traitement de caoutchouc, en particulier de traitement de déchets de caoutchouc contenant des textiles,
selon lequel un matériau de caoutchouc, contenant des fibres textiles et soumis à un broyage préliminaire dans un broyeur de caoutchouc (2), est amené à un dispositif à tamis (3), comprenant un dispositif transporteur (8), et est projeté au moyen du dispositif transporteur (8) contre un tambour tamis (7) vertical du dispositif à tamis (3), sachant que le dispositif transporteur (8) présente un arbre (9) central, doté d'une vis transporteuse (10) ou d'ailettes transporteuses, et transporte le matériau de caoutchouc à traiter dans un flux de transport dirigé vers le haut, depuis une entrée (14) du dispositif à tamis (3) jusqu'à une sortie haute (15),
comprenant un canal de retour (17) qui est disposé entre la sortie (15) du dispositif à tamis (3) et l'entrée du broyeur de caoutchouc (2) et qui mélange la matière grossière n'ayant pas traversé le tambour tamis (7) avec la matière acheminée dans le broyeur de caoutchouc (2), de sorte que la matière grossière est soumise à un broyage, conjointement avec la nouvelle matière amenée, et est ensuite renvoyée à l'entrée (14) du dispositif à tamis (3),
sachant que la projection contre le tambour tamis (7) a pour effet de séparer le matériau de caoutchouc des fibres textiles, de sorte qu'au moins une partie du matériau de caoutchouc et des fibres textiles traverse le tambour tamis (7) en tant que mélange constitué de caoutchouc en grains fins (29) et de fibres textiles libres, de sorte que du caoutchouc en grains fins (29) s'écoule sur la face externe de tamis (27), et un dépôt (28) de flocons de fibres textiles (28) se forme et se détache de temps en temps, et
selon lequel, au cours d'une autre étape de procédé, le caoutchouc en grains fins (29) est séparé des flocons de fibres qu'il contient.

12. Procédé selon la revendication 11, **caractérisé en ce que** les flocons de fibres textiles (28), par agitation du mélange constitué de caoutchouc en grains fins (29) et de flocons de fibres (28), sont agglomérés pour former des corps de feutre et sont éliminés du caoutchouc en grains fins (29).
